# EUROPEAN PATENT APPLICATION

(11) **EP 4 672 477 A1**
(43) Date of publication of application: **31.12.2025**
(21) Application number: 24760098.4
(22) Date of filing: 05.02.2024
(51) Int. Cl.: H01M 50/486, H01M 50/107, H01M 50/152, H01M 50/342, H01M 50/477, H01M 50/586, H01M 50/593

(54) **SEALED BATTERY**

(30) Priority: 24.02.2023 JP 2023027377
(71) Applicant: Panasonic Energy Co., Ltd., Osaka 570-8511 (JP)
(72) Inventor: FURUTA Yohei, Kadoma-shi, Osaka 571-0057 (JP)
(74) Representative: Eisenführ Speiser
(86) International application number: PCT/JP2024/003653
(87) International publication number: WO 2024/176792

(57) **Abstract**

In the present invention, a cylindrical battery (10) comprises: an electrode (14); an electrolyte; a bottomed cylindrical outer casing can (16) that accommodates the electrode (14) and the electrolyte; a seal (17) that closes off an opening of the outer casing can (16); and an upper insulating plate (18) that is disposed in between the electrode (14) and the seal (17). The seal (17) is provided with a safety valve. The upper insulating plate (18) includes a base material (50) having a through hole (60), and a film (53) that blocks the through hole (60). The film (53) is constituted from a thermoplastic resin that melts at a lower temperature than the base material (50) does.

## Description

### TECHNICAL FIELD

The present disclosure relates to a sealed battery, and more specifically to a sealed battery comprising an insulating plate.

### BACKGROUND ART

A sealed battery such as a cylindrical battery comprises, for example, a bottomed tubular outer can that houses an electrode assembly and an electrolyte, and a sealing assembly that seals an opening portion of the outer can, with a structure in which the sealing assembly is provided with a safety vent. Typically, electrodes constituting the electrode assembly are each connected to the outer can and the sealing assembly, and the outer can and the sealing assembly function as external terminals of positive and negative electrodes. Alternatively, the external terminals of the positive and negative electrodes may be provided in the sealing assembly. Thus, an insulating plate is disposed between the electrode assembly and the sealing assembly to achieve insulation between the electrode assembly and the sealing assembly or between the electrode assembly and the outer can.

On the other hand, when the sealing assembly is provided with a safety vent, a through hole is formed in the insulating plate so that the insulating plate does not block an exhaust path in the event of an abnormality of the battery. For example, Patent Literature 1 discloses that a cylindrical battery comprising an insulating plate disposed between an electrode assembly and a sealing assembly, the insulating plate having a through hole formed for exhaust.

### CITATION LIST

### PATENT LITERATURE

PATENT LITERATURE 1: Japanese Unexamined Patent Application Publication No. 2022-152423

### SUMMARY

The structure of the insulating plate disposed between the electrode assembly and the sealing assembly is an important element in realizing smooth exhaust from the safety vent of the sealing assembly. However, the insulating plate is required not only to have exhaust performance in the event of an abnormality but also to maintain a sufficient insulation property, which is the original function, yet both a good insulation property and exhaust performance are not easy to achieve. For example, a small area of the through hole formed in the insulating plate may prevent smooth exhaust from the safety vent, while a large area of the through hole formed in the insulating plate maintains a good exhaust path but deteriorates an insulation property.

A sealed battery according to the present disclosure is a sealed battery comprising: an electrode assembly; an electrolyte; a bottomed tubular outer can that houses the electrode assembly and the electrolyte; and a sealing assembly that seals an opening portion of the outer can, the sealing assembly being provided with a safety vent, wherein the sealed battery comprises an insulating plate disposed between the electrode assembly and the sealing assembly, the insulating plate has a substrate with a through hole and a film sealing the through hole, and the film is composed of a thermoplastic resin that melts at a lower temperature than the substrate.

The sealed battery according to the present disclosure has high insulation performance and excellent exhaust performance in the event of an abnormality. According to the present disclosure, in the sealed battery comprising the insulating plate disposed between the electrode assembly and the sealing assembly, for example, good insulation between the electrode assembly and the sealing assembly and between the electrode assembly and the outer can may be achieved, and smooth exhaust from a safety vent of the sealing assembly may be realized in the event of an abnormality.

### BRIEF DESCRIPTION OF DRAWING

FIG. 1 is a sectional view of a sealed battery of an example of an embodiment.
FIG. 2 is a plan view of an upper insulating plate of an example of an embodiment.
FIG. 3 is a sectional view taken along line A-A in FIG. 2.

### DESCRIPTION OF EMBODIMENTS

Hereinafter, an example of embodiments of a sealed battery according to the present disclosure will be described in detail with reference to the drawings. The scope of the present disclosure includes constitutions composed of selective combinations of constitutional elements of a plurality of embodiments and modified examples described below.

In embodiments described below, a cylindrical battery 10, in which a wound electrode assembly 14 is housed in a bottomed cylindrical outer can 16, will be exemplified, but an exterior body of the battery is not limited to the cylindrical outer can. A sealed battery according to the present disclosure may comprise: a bottomed tubular outer can that houses an electrode assembly and an electrolyte; a sealing assembly including a safety vent; and an insulating plate, and an example of another embodiment includes a rectangular battery comprising a rectangular outer can. The electrode assembly is not limited to a wound electrode assembly, and may be a stacked electrode assembly in which a plurality of positive electrodes and a plurality of negative electrodes are alternately stacked via a separator.

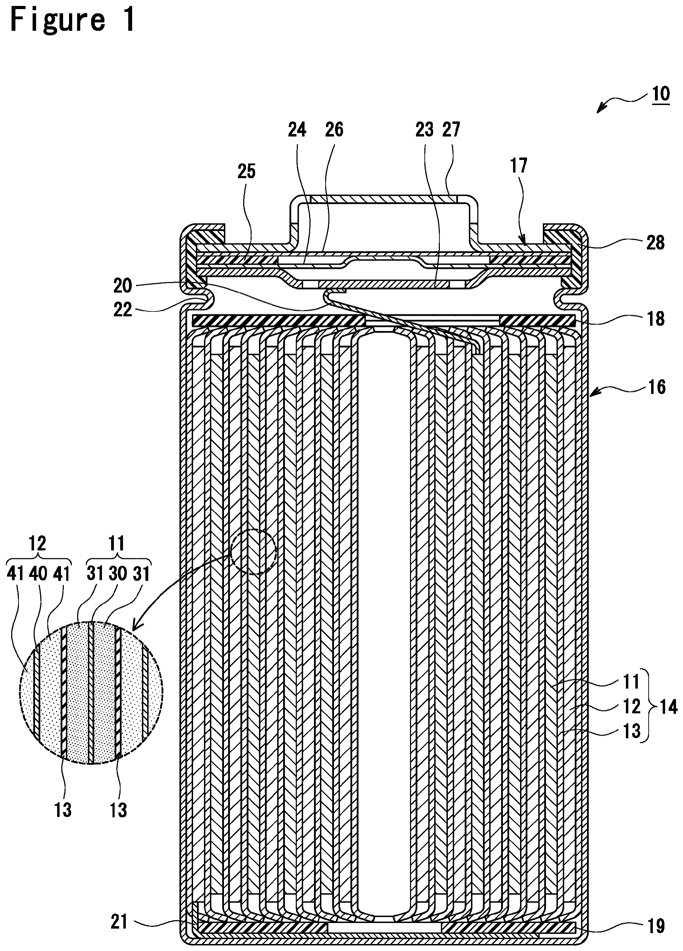

FIG. 1 is a view schematically illustrating an axial cross section of the cylindrical battery 10 of an example of an embodiment. As illustrated in FIG. 1, the cylindrical battery 10 comprises the wound electrode assembly 14, an electrolyte, the bottomed cylindrical outer can 16 housing the electrode assembly 14 and the electrolyte, and a sealing assembly 17 sealing an opening portion of the outer can 16. As will be described in detail later, the sealing assembly 17 is provided with a safety vent that opens in the event of an abnormality of the battery to release a high-temperature gas inside the battery. The electrode assembly 14 has a positive electrode 11, a negative electrode 12, and a separator 13, and has a wound structure in which the positive electrode 11 and the negative electrode 12 are spirally wound via the separator 13. Hereinafter, for convenience of description, the sealing assembly 17 side of the battery will be described as the upper side, and the bottom side of the outer can 16 will be described as the lower side.

The electrolyte may be an aqueous electrolyte, but in the present embodiment, a non-aqueous electrolyte is to be used. The non-aqueous electrolyte has ion conductivity (for example, lithium-ion conductivity). The non-aqueous electrolyte may be a liquid electrolyte (an electrolyte liquid) or may be a solid electrolyte. The cylindrical battery 10 is, for example, a lithium-ion battery.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like is used, for example. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to form a gel is used, for example. As the polymer material, a fluororesin, an acrylic resin, a polyether resin, or the like is used, for example. As the inorganic solid electrolyte, a known material for an all-solid lithium-ion secondary battery and the like (for example, an oxide-type solid electrolyte, a sulfide-type solid electrolyte, a halide-type solid electrolyte, or the like) is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

The positive electrode 11 has a positive electrode core 30 and a positive electrode mixture layer 31 disposed on the positive electrode core 30. For the positive electrode core 30, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer 31 includes a positive electrode active material, a conductive agent, and a binder, and is preferably provided on both surfaces of the positive electrode core 30. For the positive electrode active material, a lithium-transition metal composite oxide containing a transition metal element such as Ni, Co, and Mn is used.

The negative electrode 12 has a negative electrode core 40 and a negative electrode mixture layer 41 disposed on the negative electrode core 40. For the negative electrode core 40, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. For the negative electrode active material, a carbon material that reversibly occludes and releases lithium ions is typically used. For the negative electrode active material, an element that forms an alloy with Li, such as Si and Sn, a material containing such an element, and the like may be used.

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE)/polypropylene (PP); or a three-layer structure of PE/PP/PE.

The outer can 16 is a bottomed cylindrical metallic container having an opening portion on one end side in an axial direction, and the upper opening portion of the outer can 16 is sealed with the sealing assembly 17. The cylindrical battery 10 comprises an upper insulating plate 18 disposed between the electrode assembly 14 and the sealing assembly 17. In addition, the cylindrical battery 10 comprises a lower insulating plate 19 disposed between the electrode assembly 14 and a bottom inner surface of the outer can 16. That is, insulating plates are each disposed on the upper and lower sides of the electrode assembly 14.

In the present embodiment, the positive electrode lead 20 extends through a through hole 60 of the upper insulating plate 18 toward the sealing assembly 17 side, and the negative electrode lead 21 extends through the outside of the lower insulating plate 19 toward the bottom side of the outer can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the outer can 16 by welding or the like, and the outer can 16 becomes a negative electrode terminal.

A gasket 28 is provided between the outer can 16 and the sealing assembly 17 to achieve sealability inside the battery. The gasket 28 also has the function of insulating the outer can 16 and the sealing assembly 17. On the outer can 16, a grooved portion 22 in which a part of a side surface portion thereof projects inward to support the sealing assembly 17 is formed. The grooved portion 22 is preferably formed in a circular shape along a circumferential direction of the outer can 16, and supports the sealing assembly 17 with the upper face thereof. The sealing assembly 17 is fixed on the upper part of the outer can 16 with the grooved portion 22 and with an end part of the opening of the outer can 16 crimping the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26.

If the internal pressure increases when an abnormality occurs in the cylindrical battery 10, the lower vent member 24 is deformed so as to push the upper vent member 26 up toward the cap 27 side and breaks, and thereby a current pathway between the lower vent member 24 and the upper vent member 26 is cut off. If the internal pressure of the battery further increases, the upper vent member 26 breaks, and a high-temperature gas is discharged through an opening portion of the cap 27. That is, the sealing assembly 17 is provided with a current interruption mechanism and a safety vent. The safety vent is composed of two vent members (the lower vent member 24 and the upper vent member 26).

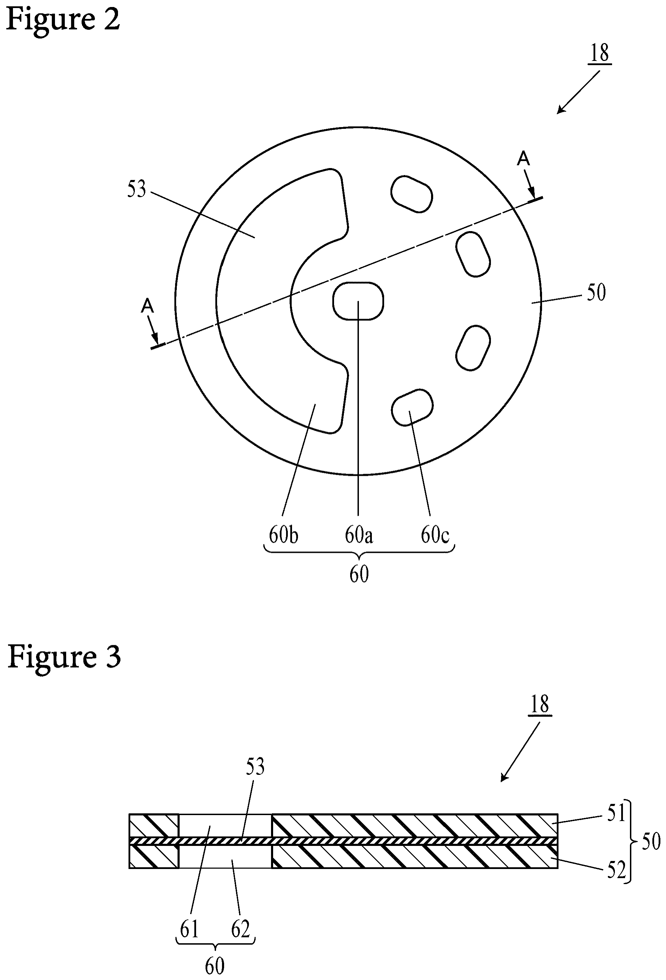

Hereinafter, the configuration of the upper insulating plate 18 will be described in detail with reference to FIGS. 2 and 3 as appropriate. FIG. 2 is a plan view of the upper insulating plate 18, and FIG. 3 is a sectional view taken along line A-A in FIG. 2.

As illustrated in FIG. 1, the upper insulating plate 18 is a plate-shaped insulating member disposed between the electrode assembly 14 and the sealing assembly 17 so as to widely cover a top surface of the electrode assembly 14. The upper insulating plate 18 is interposed between the electrode assembly 14 and the grooved portion 22 of the outer can 16. In the present embodiment, the sealing assembly 17 becomes a positive electrode terminal, and the outer can 16 becomes a negative electrode terminal. Thus, the upper insulating plate 18 insulates such members so that the negative electrode 12 of the electrode assembly 14 does not contact with the sealing assembly 17 or so that the positive electrode 11 of the electrode assembly 14 does not contact with the outer can 16.

As illustrated in FIGS. 2 and 3, the upper insulating plate 18 has a substrate 50 with through holes 60 and a film 53 sealing the through holes 60. The upper insulating plate 18 (the substrate 50) is a disk in which a plurality of through holes 60 are formed, and, for example, a circle along an outer peripheral edge of the upper insulating plate 18 has a perfect circle shape in plan view. Although the upper insulating plate 18 widely covers the top surface of the electrode assembly 14, as described above, a safety vent is provided in the sealing assembly 17 disposed on the upper insulating plate 18, and the safety vent may open in the event of an abnormality of the battery to release gas. Therefore, the through holes 60 are formed in the upper insulating plate 18 with a large area to realize smooth exhaust from the safety vent.

In the example illustrated in FIG. 2, a through hole 60a having a substantially rectangular shape in plan view is formed at a central part of the upper insulating plate 18 in a radial direction, and a through hole 60b having a substantially C-shape in plan view and a plurality of through holes 60c are formed so as to surround the through hole 60a. The through holes 60b and 60c are disposed on concentric circles with the center of the upper insulating plate 18 in the radial direction being as its center. The through hole 60b is the largest of through holes 60 formed in the upper insulating plate 18 and has an opening area of, for example, greater than or equal to 20% and less than or equal to 45% of the area (the area of the portion surrounded by the outer peripheral edge) of a circle having the same diameter as the upper insulating plate 18. The through holes 60c each have a substantially rectangular shape in plan view with a size similar to that of the through hole 60a, four of which are formed at equal intervals along a circumferential direction of the upper insulating plate 18. Note that the number, shape, disposition, and the like of the through holes 60 in the upper insulating plate 18 are not limited to the embodiment exemplified in FIG. 2.

The through holes 60 each function as an exhaust hole in the event of an abnormality and as a hole through which the positive electrode lead 20 and the electrolyte liquid pass. Therefore, the film 53 sealing the through holes 60 preferably has a fine hole or slit for passing the positive electrode lead 20 and the electrolyte liquid. In the present embodiment, the positive electrode lead 20 passes through the largest through hole 60b. Each of the through holes 60a, 60b, and 60c functions as an exhaust hole in the event of an abnormality and an injection hole for an electrolyte liquid. Although a large hole such as the through hole 60b is provided to smooth the exhaust in the event of an abnormality, there is a concern about deterioration of the insulation performance since the electrode assembly is largely exposed from the through hole in this case.

Since the upper insulating plate 18 has the film 53 sealing the through holes 60, high insulation performance may be achieved even when a large hole such as the through hole 60b is formed. The film 53 is composed of a thermoplastic resin that melts at a lower temperature than the substrate 50. Thus, the film 53 melts in the event of an abnormality of the battery. As a result, the through holes 60 are opened to form an exhaust hole. In other words, the upper insulating plate 18 has high insulation performance during normal use because the film 53 seals the through holes 60, and becomes a member with excellent air permeability in the event of an abnormality because the film 53 melts to open the through holes 60.

The thermoplastic resin constituting the film 53 may be a resin that melts at a lower temperature than a first substrate 51 by heat generated in the event of an abnormality, and the composition thereof is not particularly limited. When an abnormality such as an internal short circuit occurs, for example, the temperature inside the battery becomes greater than or equal to 200°C, and a high-temperature gas is released from the safety vent of the sealing assembly 17. The film 53 preferably has a melting point of less than or equal to 200°C. In this case, the film 53 quickly melts in the event of an abnormality of the battery to be able to realize smooth exhaust. The melting point of the film 53 is, for example, greater than or equal to 100°C, more preferably greater than or equal to 100°C and less than or equal to 180°C, and particularly preferably greater than or equal to 120°C and less than or equal to 160°C.

An example of the thermoplastic resin constituting the film 53 includes a polyolefin such as polyethylene or polypropylene (PP), polystyrene, or polyvinyl chloride. Note that a low-melting-point polyamide film, a polyethylene terephthalate (PET) film, or the like can be used. Among these, PP is preferable. The film 53 is composed of, for example, PP as a main component, or may be composed of only PP. A thickness of the film 53 is preferably less than a thickness of the substrate 50, and specifically, is preferably greater than or equal to 5 µm and less than or equal to 100 µm, and particularly preferably greater than or equal to 10 µm and less than or equal to 50 µm.

The substrate 50 may be composed of a resin having a higher heat resistance than the film 53 or may be composed of a thermoplastic resin having a higher melting point than the film 53, and is preferably composed of a curable resin having a crosslinked structure. The curable resin constituting the substrate 50 has no melting point, for example, and does not melt even at a high temperature of greater than or equal to 200°C. The substrate 50 may be composed of a curable resin including fiber materials such as glass fibers and carbon fibers, fillers such as silica, clay, and mica, or the like. The curable resin constituting the substrate 50 is preferably a thermosetting resin that is cured by heating.

The substrate 50 is composed of, for example, a fiber-reinforced phenolic resin as a main component. The fiber-reinforced phenolic resin is contained as a main component to obtain a substrate 50 having high strength and high heat resistance. The substrate 50 may be composed of only the fiber-reinforced phenolic resin. Examples of the curable resin constituting the substrate 50 include an epoxy resin and a polyimide, in addition to the phenolic resin. The thickness of the substrate 50 is preferably greater than the thickness of the film 53, and specifically, is preferably greater than or equal to 0.1 mm and less than or equal to 1 mm, and particularly preferably greater than or equal to 0.1 mm and less than or equal to 0.5 mm.

The upper insulating plate 18 may have a single layer of the substrate 50 and a single film 53 and have a structure in which the film 53 is bonded to one surface of the substrate 50, but the substrate 50 preferably includes a first substrate 51 and a second substrate 52. In this case, the upper insulating plate 18 has a structure in which the film 53 is sandwiched between the first substrate 51 and the second substrate 52 from both sides in the thickness direction. A three-layer structure with the film 53 sandwiched therebetween hardly causes peeling, tearing, or the like of the film 53 and improves the durability of the upper insulating plate 18.

the same substrate may be used for the first substrate 51 and the second substrate 52. That is, the first substrate 51 and the second substrate 52 are composed of the same material and have the same dimensions (i.e., thickness and diameter). A through hole 61 is formed in the first substrate 51, and a through hole 62 is formed in the second substrate 52. The first substrate 51 and the second substrate 52 are disposed so that the through holes 61 and 62 overlap each other in the thickness direction with the film 53 sandwiched therebetween, and these three members are bonded together to obtain an upper insulating plate 18 having a three-layer structure in which the film 53 is sandwiched between the two substrates from both sides in the thickness direction. The three members may be bonded using an adhesive or may be bonded by heat welding, solvent welding, ultrasonic welding, or the like.

The upper insulating plate 18 preferably has a thickness entirely of greater than or equal to 0.2 mm and less than or equal to 1.0 mm. The thickness of the film 53 is preferably less than or equal to 30% of the total thickness of the substrate 50, and more preferably less than or equal to 20%. In this case, the film 53 is quickly melted by heat generated in the event of an abnormality of the battery to form an exhaust hole. An example of a preferable range of the thickness of the film 53 is greater than or equal to 5% and less than or equal to 30% of the total thickness of the substrate 50.

The film 53 is disposed to seal at least a through hole 60b. High insulation performance is achieved by sealing the largest through hole 60b. From the viewpoint of improvement in productivity and the like, however, the film 53 is preferably formed in a disk shape having the same diameter as that of the substrate 50 and disposed so as not to protrude from a space between the first substrate 51 and the second substrate 52. In this case, all the through holes 60 are sealed with the film 53. Note that the upper insulating plate 18 may be produced by laminating and bonding the first substrate 51, the second substrate 52, and the film 53 together, and then cutting the resultant into a disk shape.

As described above, a slit through which the positive electrode lead 20 passes is formed in the film 53. Since the positive electrode lead 20 passes through the through hole 60b, this slit is formed in a portion of the film 53 covering the through hole 60b. In addition, the film 53 may have a large number of fine holes through which the electrolyte liquid passes. These holes are fine holes that do not impair the insulation property of the upper insulating plate 18, and an example thereof includes holes having a diameter of less than or equal to 0.5 mm.

As described above, the upper insulating plate 18 with the configuration described above is used to obtain a cylindrical battery 10 having high insulation performance and excellent exhaust performance in the event of an abnormality. Although the upper insulating plate 18 has large through holes 60, good insulation between the electrode assembly 14 and the sealing assembly 17 and between the electrode assembly 14 and the outer can 16 may be achieved since the through holes 60 are covered with the film 53 during normal use. If the temperature rises when an abnormality occurs in the battery, the film 53 melts to open the through holes 60, and thereby smooth exhaust can be realized from the safety vent of the sealing assembly 17.

The embodiment may be appropriately changed in design within a range that does not impair the object of the present disclosure. For example, although the upper insulating plate 18 of the embodiment has a single film 53, the insulating plate may have two or more low-melting-point films. An example thereof includes an insulating plate having low-melting-point films bonded to both surfaces of a substrate in which a through hole is formed.

The present disclosure will be further described with the following embodiments.

Constitution 1: A sealed battery, comprising: an electrode assembly; an electrolyte; a bottomed tubular outer can that houses the electrode assembly and the electrolyte; and a sealing assembly that seals an opening portion of the outer can, the sealing assembly being provided with a safety vent, wherein the sealed battery comprises an insulating plate disposed between the electrode assembly and the sealing assembly, the insulating plate has a substrate with a through hole and a film sealing the through hole, and the film is composed of a thermoplastic resin that melts at a lower temperature than the substrate.

Constitution 2: The sealed battery according to Constitution 1, wherein the substrate includes a first substrate and a second substrate, and the film is sandwiched between the first substrate and the second substrate from both sides in a thickness direction.

Constitution 3: The sealed battery according to Constitution 1 or 2, wherein the thermoplastic resin constituting the film has a melting point of less than or equal to 200°C.

Constitution 4: The sealed battery according to any one of Constitutions 1 to 3, wherein the substrate is composed of a thermosetting resin.

Constitution 5: The sealed battery according to any one of Constitutions 1 to 4, wherein sealed battery is a cylindrical battery comprising the outer can in a bottomed cylindrical shape.

### REFERENCE SIGNS LIST

10 Cylindrical battery, 11 Positive electrode, 12 Negative electrode, 13 Separator, 14 Electrode assembly, 16 Outer can, 17 Sealing assembly, 18 Upper insulating plate, 19 Lower insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 50 Substrate, 51 First substrate, 52 Second substrate, 53 Film, 60, 60a, 60b, 60c, 61, 62 Through hole

## Claims

1. A sealed battery, comprising:
an electrode assembly;
an electrolyte;
a bottomed tubular outer can that houses the electrode assembly and the electrolyte; and
a sealing assembly that seals an opening portion of the outer can, the sealing assembly being provided with a safety vent, wherein
the sealed battery comprises an insulating plate disposed between the electrode assembly and the sealing assembly,
the insulating plate has a substrate with a through hole and a film sealing the through hole, and
the film is composed of a thermoplastic resin that melts at a lower temperature than the substrate.

2. The sealed battery according to claim 1, wherein
the substrate includes a first substrate and a second substrate, and
the film is sandwiched between the first substrate and the second substrate from both sides in a thickness direction.

3. The sealed battery according to claim 1, wherein the film has a melting point of less than or equal to 200°C.

4. The sealed battery according to claim 1, wherein the substrate is composed of a thermosetting resin.

5. The sealed battery according to any one of claims 1 to 4, wherein the sealed battery is a cylindrical battery comprising the outer can in a bottomed cylindrical shape.
